# EUROPÄISCHE PATENTSCHRIFT

(11) **EP 0 528 786 B1**
(45) Veröffentlichungstag und Bekanntmachung des Hinweises auf die Patenterteilung: **17.04.1996**
(21) Anmeldenummer: 92890182.6
(22) Anmeldetag: 13.08.1992
(51) Int. Cl.: C02F 3/04

(54) **Anlage zur biologischen Abwasserreinigung**
Biological waste water purification plant
Installation pour la purification biologique d'eau usée

(30) Priorität: 19.08.1991 AT 1626/91
(43) Veröffentlichungstag der Anmeldung: 24.02.1993
(73) Patentinhaber: Wimmer, Elmar, A-4840 Vöcklabruck (AT); Joas, Emil, Mag., A-4840 Vöcklabruck (AT)
(72) Erfinder: Wimmer, Elmar, A-4840 Vöcklabruck (AT); Joas, Emil, Mag., A-4840 Vöcklabruck (AT)
(74) Vertreter: Hübscher, Heiner, Dipl.-Ing.

(56) Entgegenhaltungen:
- DE-A- 3 716 637
- DE-A- 3 825 229
- GB-A- 1 498 173
- US-A- 3 456 592

## Beschreibung

Die Erfindung bezieht sich auf eine Anlage zur biologischen Abwasserreinigung mit wenigstens einem zwischen einem oberen Abwasserverteiler und einer unteren Auffangwanne vorgesehenen Tropfkörper, der eine wasserdurchlässige, Mikroorganismen aufnehmende Filterschicht und eine der Filterschicht nachgeordnete, den Wasserdurchfluß abwechselnd sperrende oder freigebende Stauschicht aufweist.

Unter biologischer Abwasserreinigung wird das Zersetzen der im Abwasser enthaltenen organischen Substanzen durch aerobe Mikroorganismen, vor allem Bakterien, in ökologisch weitgehend unbedenkliche Verbindungen, letztlich in Kohlendioxid, Wasser, Nitrat und Sulfat, verstanden, wobei Voraussetzung für den unbehinderten biologischen Abbau der Schmutzstoffe eine ausreichende Sauerstoffversorgung der Mikroorganismen ist. Um daher eine entsprechende Sauerstoffzufuhr zu erreichen, ist es bereits bekannt, abwasserbeaufschlagbare Tropfkörper einzusetzen, die eine Filterschicht aus porösem Material aufweisen, so daß aufgrund der großen Oberfläche die in der Filterschicht angesiedelten Mikroorganismen mit Luftsauerstoff in Verbindung kommen und das durch die Filterschicht hindurchsickernde Abwasser abbauen können. Allerdings ist durch diese Tropfkörper nur bei verhältnismäßig geringem Abwasseranfall eine ausreichende Sauerstoffzufuhr sichergestellt und die so sauerstoffversorgten Mikroorganismen sind unfähig, Schwankungen der Abwasserbelastung oder eine Steigerung der Abwasserkonzentration zu bewältigen. Für die Reinigung feststoffhaltiger Abwasser sind solche Anlagen mit Tropfkörpern bisher überhaupt ungeeignet.

Aus der GB-A-1 498 173 ist auch schon ein Abwasserreinigungsverfahren bekannt, nach dem eine Mikroorganismen aufnehmende Filterschicht im Bodenbereich in ein Wasserbett getaucht und hier in geflutetem Zustand betrieben wird, wozu der Boden einen wasserdichten Abschluß aufweist und das Wasser zur Begrenzung des Wasserstandes zumindest zeitweise abgesaugt oder abfließen gelassen wird.

Der Erfindung liegt die Aufgabe zugrunde, eine Anlage der eingangs geschilderten Art zu schaffen, die sich durch eine gesicherte Sauerstoffversorgung der Mikroorganismen auszeichnet und eine durchgreifende, vom Abwasseranfall und von der Abwasserbelastung weitgehend unabhängige Reinigungswirkung gewährleistet.

Die Erfindung löst diese Aufgabe dadurch, daß die Stauschicht aus Montmorillonit enthaltenden Tonmineralien besteht. Diese Stauschicht verursacht ein periodenweises Aufstauen und Durchbrechen des die Filterschicht durchsickernden Abwassers, so daß beim plötzlichen Durchbrechen des aufgestauten Wassers Luft angesaugt wird und die Mikroorganismen in der Filterschicht periodenweise gewissermaßen mit einem Sauerstoffüberschuß beaufschlagt werden. Es kommt zu einer Intensivierung der Sauerstoffversorgung und die Mikroorganismen können die anfallenden organischen Substanzen im gewünschten Ausmaß abbauen. Der Staueffekt der Stauschicht bringt außerdem eine gleichmäßige Abwasserverteilung innerhalb der Filterschicht mit sich, so daß alle vorhandenen Mikroorganismen gleichmäßig zum Einsatz kommen und damit auch deren Abbaukapazität voll genutzt werden kann. Dabei reagieren die verwendeten Sperrmaterialien selbständig auf den jeweiligen Wasseranfall, da sie in einer ersten Phase Wasser aufnehmen und den Wasserdurchfluß durch ihre aufquellenden Eigenschaften sperren, bis nach einem bestimmten Sättigungsgrad, der zeit- und/oder durckabhängig sein kann, in einer zweiten Phase das aufgenommene Wasser freigegeben und der Durchfluß schlagartig geöffnet wird. Diese Materialien führen daher zu einer vollkommen selbständig arbeitenden Stauschicht die eine gewünschte Sauerstoffversorgung garantiert.

Sind der Stauschicht eine Grob- und eine Feinfilterschicht aus offenporigen Gesteinen mit organischen Trägermaterialien als Filterschicht vorgeordnet, kommt es zu einer guten Verteilung des zu reinigenden Abwassers beim Durchsickern der Filterschicht und, bedingt durch die Stufung der Filterschicht, auch zu einem stufenweisen Abbau der organischen Substanzen mit einem gesteigerten Reinigungseffekt.

Beste Ergebnisse für die Filterschicht ergeben sich, wenn die Grob- bzw Feinfilterschicht aus körnigem Material, insbesondere Lavagrus mit einer Korngröße von mehr bzw. weniger als etwa 1,5 mm bestehen, wobei als organisches Trägermaterial Sägespäne, Braunkohle od. dgl. Verwendung finden kann.

Um von vornherein bei der Abwasserbeaufschlagung des Tropfkörpers für eine möglichst gleichmäßige Wasserverteilung zu sorgen, kann oberhalb der Filterschicht eine Verteilerschicht aus porösem Material vorgesehen sein, beispielsweise eine Schicht aus Tonkügelchen, so daß das aufgesprühte Abwasser bereits in der Verteilerschicht gut verteilt wird und gleichmäßig über die Oberfläche verteilt auf die darunterliegende Filterschicht abtropft.

Sind zumindest zwei jeweils Verteiler-, Filter- und Stauschicht umfassende Tropfkörper in einem Gitterkorb od. dgl. zu einer Tropfkörpereinheit übereinandergeschichtet, entsteht eine besonders wirkungsvolle Reinigungseinheit, da die in diese Einheit eingebundenen Tropfkörper in Serie hintereinandergeschaltet sind. Dabei wird durch den Gitterkorb für einen allseitigen Luftzutritt zu den Schichten gesorgt und die Verteilerschichten verhindern während des Durchflusses unerwünschte Wasserkonzentrationen.

Um besonders starke Reinigungsleistungen zu erzielen, bilden zwei oder mehr übereinandergestapelte Tropfkörpereinheiten einen Tropfkörperturm, dem ein gemeinsamer Abwasserverteiler und eine gemeinsame Auffangwanne zugeordnet sind, so daß das Abwasser auf seinem Weg vom Verteiler bis zur Auffangwanne eine Mehrzahl von einzelnen Tropfkörpern durchwandert und ein entsprechendes Reinigungsergebnis erzielt wird. Auch hier wird durch geeignete Zwischenräume zwischen den einzelnen Tropfkörpereinheiten für einen ausreichenden Luftaustausch gesorgt, so daß die Sauerstoffversorgung der Mikroorganismen in jeder einzelnen Filterschicht sichergestellt werden kann.

Um die Anlage von einer ständigen Wasserzufuhr unabhängig zu machen und sie daher auch in wasserarmen Gebieten und in Extremlagen einsetzen zu können, ist ein Reinigungskreislauf vorgesehen, der von einem Abwassersammelbehälter ausgeht und über wenigstens eine Tropfkörpereinheit oder einen Tropfkörperturm, vorzugsweise über drei hintereinandergeschaltete Tropfkörpertürme, führt. Das anfallende Abwasser kommt in einen Sammelbehälter, der als Pufferspeicher dient und auch bei ungleichmäßigem Abwasseranfall die Tropfkörpereinheiten bzw. die Tropfkörpertürme gleichmäßig mit Abwasser zu beaufschlagen erlaubt. Die Tropfkörpereinheiten bzw. Tropfkörpertürme, die je nach Abwasserart und Verschmutzung aufgebaut und in Serie hintereinandergeschaltet sind, führen bei entsprechender Anzahl der enthaltenen Tropfkörper zu einer vollständigen biologischen Abwasserreinigung, so daß das gereinigte Wasser wieder in den Sammelbehälter zurückgeleitet werden kann und sich ein mehr oder weniger geschlossener Reinigungskreislauf einstellt. Meist werden dafür drei Tropfkörpertürme, für eine Starklastreinigung, eine Schwachlastreinigung und eine Schönungsreinigung,eingesetzt, wodurch der erforderliche Reinigungsgrad gewährleistet werden kann und sich auch über lange Zeitspannen ein einwandfreier Reinigungskreislauf aufrechterhalten läßt. Selbstverständlich mub dabei durch geeignete Pumpen und eine entsprechende Steuerung für den erforderlichen Wasserkreislauf und die dosierte Tropfkörperbeaufschlagung gesorgt werden und gegebenenfalls muß auch eine Klimakammer die hier für die Mikroorganismen geeigneten Umweltbedingungen schaffen.

Besonders günstig ist es, wenn der Abwassersammelbehälter mit einer Schneidepumpe ausgestattet ist, durch die feste Bestandteile des Abwassers zerkleinert werden und dadurch den Tropfkörpern zuführbar sind. Die Reinigungsanlage ist daher auch zum Abbau von Fäkalien bestens geeignet, wobei das gereinigte Wasser im Zuge der Kreislaufführung beispielsweise wieder als WC-Spülung zur Verfügung steht. Diese Anlage läßt sich dann optimal für die Abwasserreinigung von Berghütten od. dgl. Abwasserquellen ohne natürliche Wasserzufuhr einsetzen.

Ist dem ersten Tropfkörperturm eine Schlammabscheideeinrichtung aufgesetzt, die vorzugsweise mehrere parallele, in einem Gitterkorb schräg angeordnete Siebeinsätze aufweist, wird der Tropfkörperturm vor einer Verstopfung mit anorganischen Reststoffen geschützt, welche Schlammabscheideeinrichtung im Rahmen der erforderlichen Wartungsarbeiten von Zeit zu Zeit zu entleeren ist, wobei auch die abgeschiedenen Reststoffe entsorgt werden.

In der Zeichnung ist der Erfindungsgegenstand anhand eines Ausführungsbeispieles näher veranschaulicht, und zwar zeigen
Fig. 1 eine erfindungsgemäße Topfkörpereinheit im teilgeschnittenen Schaubild,
Fig. 2 ein Anlagenschema einer erfindungsgemäßen Anlage und
Fig. 3 eine Schlammabscheideeinrichtung für diese Anlage wiederum im teilgeschnittenen Schaubild.

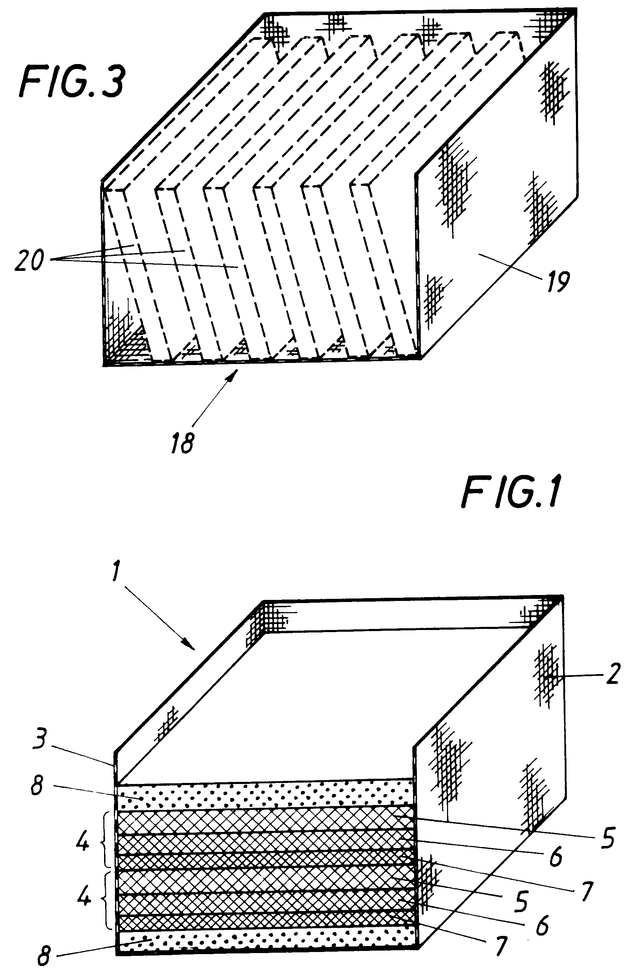

Die in Fig. 1 dargestellte Tropfköpereinheit 1 setzt sich aus zwei in einem mit einem feinmaschigen Netz 2 umspannten Gitterkorb 3 übereinandergeschichteten Tropfkörpern 4 zusammen, wobei jeder Tropfkörper 4 eine Grobfilterschicht 5, eine Feinfilterschicht 6 und eine Stauschicht 7 umfaßt. Die Grob- und Feinfilterschichten 5, 6 bestehen aus offenporigen Gesteinen, beispielsweise Lavagrus mit einer Korngröße von mehr als 1,5 mm für die Grobfilterschicht und mit einer Korngröße von weniger als 1,5 mm für die Feinfilterschicht, welcher Lavagrus mit einem organischen Trägermaterial, etwa Sägespäne, vermischt ist und zur Aufnahme der für den Abbau der organischen Substanzen im Abwasser erforderlichen Mikroorganismen dient. Die Stauschicht 7 besteht aus Tonmineralien, die mindestens 30 % Montmorillonit enthalten, so daß durch den Tropfkörper 4 hindurchsickerndes Abwasser bis zu einem bestimmten Sättigungsgrad dieses Materials aufgestaut wird und dann plötzlich durch diese Stauschicht hindurchbricht, was ein periodenweises intensives Belüften der in den Filterschichten 5, 6 vorhandenen Mikroorganismen mit sich bringt. Eine ausreichende Sauerstoffversorgung dieser Mikroorganismen ist daher gewährleistet und damit die Voraussetzung für den ordnungsgemäßen Abbau der organischen Substanzen im Abwasser gegeben.

Oberhalb und unterhalb der Tropfkörper 4 weist die Tropfkörpereinheit 1 eine Verteilerschicht 8 aus porösem Material auf, um eine gleichmäßige Verteilung des auf die Tropfkörpereinheit 1 abtropfenden Abwassers und des gereinigten, von der Tropfkörpereinheit abfließenden Wassers sicherzustellen.

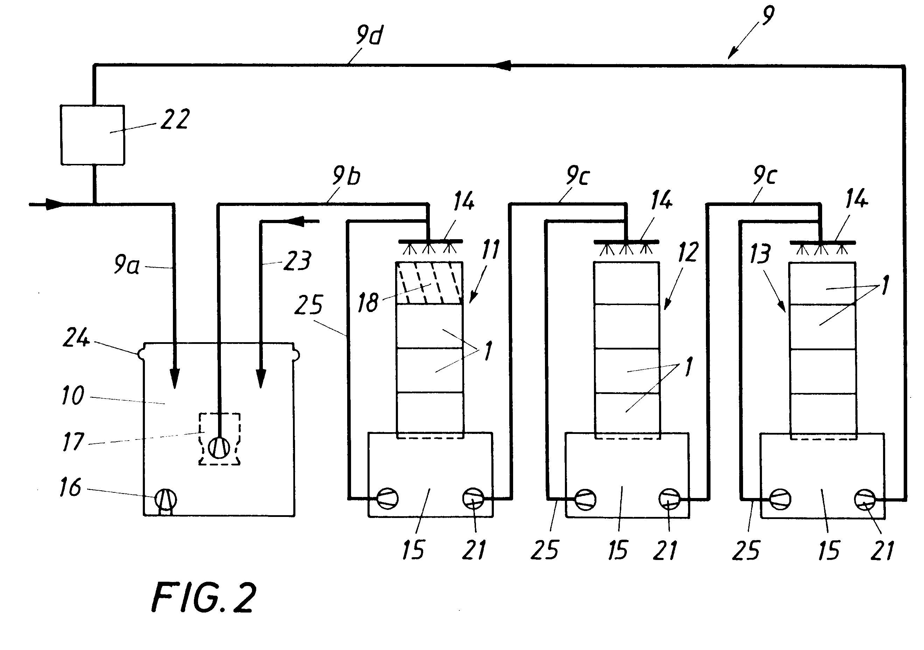

Um eine von einer Frischwasserzufuhr weitgehend unabhängige Reinigungsanlage zu erreichen, wird, wie in Fig. 2 verdeutlicht, ein Reinigungskreislauf 9 geschaffen, der von einem Sammelbehälter 10 ausgeht und über beispielsweise drei Tropfkörpertürme 11, 12, 13 wieder zurück zum Sammelbehälter führt. Die Tropfkörpertürme 11, 12, 13 setzen sich jeweils aus übereinandergestapelten Tropfkörpereinheiten 1 zusammen, so daß es pro Turm zu einer entsprechenden Abbauleistung kommt, wobei zur Abwasserführung oberhalb jedes Turmes ein Abwasserverteiler 14 mit einem entsprechenden Düsensystem zum Aufsprühen des Abwassers und unterhalb eine Auffangwanne 15 zum Auffangen des gereinigten Wassers vorgesehen sind.

Der Sammelbehälter 10, in den über einen Zulauf 9a Abwässer, Fäkalien od. dgl. einfließen, ist mit einer Schneidepumpe 16 ausgestattet, die für eine feine Zerteilung der Festbestandteile im Abwasser sorgt. Über eine Filtereinrichtung 17 wird dann das Abwasser mit dem zerkleinerten Festteilen über eine Vorlaufleitung 9b dem Abwasserverteiler 14 des ersten Turmes 11 zugeführt und dieser erste Turm dadurch mit Abwasser beaufschlagt. Um hier eine Verstopfung zu verhindern, ist den Tropfkörpereinheiten 1 eine Schlammabscheideeinrichtung 18 vorgeordnet, die, wie in Fig. 3 näher veranschaulicht, aus einem Gitterkorb 19 und mehreren schräg zur Abtropfrichtung liegenden Siebeinsätzen 20 besteht. Hier werden die festen anorganischen Reststoffe aus dem Abwasser abgesondert, und nur organisch verunreinigtes Abwasser kommt in die nachgeordneten Tropfkörpereinheiten 1, in denen diese organischen Substanzen biologisch abgebaut werden. Das gereinigte Abwasser fließt in die Auffangwanne 15 ab, aus der es über eine Umwälzpumpe 21 und eine Verbindungsleitung 9c dem Abwasserverteiler 14 des zweiten Tropfkörperturmes 12 zugebracht wird, den es nun zur weiteren Reinigung durchwandern muß, und von der Auffangwanne 15 dieses zweiten Turmes 12 gelangt es wieder über eine Umwälzpumpe 21 und eine Verbindungsleitung 9c zum dritten Tropfkörperturm 13, wobei auch hier ein Abwasserverteiler 14 für eine gleichmäßige Besprühung sorgt und eine Auffangwanne 15 das gereinigte Abwasser aufnimmt.

Durch diese drei Tropfkörpertürme wird das Abwasser stufenweise gereinigt, und zwar dient der erste Turm 11 für eine Starklastreinigung, der zweite Turm 12 für eine Schwachlastreinigung und der dritte Turm 13 für eine Schönungsreinigung, so daß das Abwasser nach dem Durchgang durch die drei Türme biologisch einwandfrei gereinigt und auch geruchlos ist und sich für eine Wiederverwendung als Brauchwasser eignet. Über eine Umwälzpumpe 21 und eine Rücklaufleitung 9d wird dieses Wasser im Kreislauf wieder dem Sammelbehälter 10 zugefördert, wobei es auf diesem Weg als Brauchwasser für ein WC oder eine andere Verbrauchereinrichtung 22 zur Verfügung steht.

Je nach Abwasser- und Fäkalienanfall dient der Sammelbehälter 10 als Pufferspeicher, und durch eine Zuluftleitung 23 und eine Luftfiltereinrichtung 24 wird eine Be- und Entlüftung des Behälters 10 sichergestellt, wobei die Pumpwirkungen der Schneidepumpe 16 und der Umwälzpumpen 21 auch eine Belüftung des Abwassers mit sich bringen. Durch eine nicht weiter dargestellte Steuerungseinrichtung kommt es zu einer dosierten und periodischen Abwasserbeaufschlagung der Tropfkörpertürme 11, 12, 13 und über geeignete Zirkulationseinrichtungen 25 kann das Abwasser auch in einer Art Kurzschlußverfahren mehrmals durch ein- und denselben Tropfkörperturm hindurchgeleitet werden, so daß es möglich ist, auch über lange Zeitspannen einen automatischen, funktionssicheren Anlagenbetrieb zu gewährleisten.

## Patentansprüche

1. Anlage zur biologischen Abwasserreinigung mit wenigstens einem zwischen einem oberen Abwasserverteiler (14) und einer unteren Auffangwanne (15) vorgesehenen Tropfkörper (4), der eine wasserdurchlässige, Mikroorganismen aufnehmende Filterschicht (5, 6) und eine der Filterschicht (5, 6) nachgeordnete, den Wasserdurchfluß abwechselnd sperrende oder freigebende Stauschicht (7) aufweist, dadurch gekennzeichnet, daß die Stauschicht (7) aus Montmorillonit enthaltenden Tonmineralien besteht.

2. Anlage nach Anspruch 1, dadurch gekennzeichnet, daß der Stauschicht (7) eine Grob- (5) und eine Feinfilterschicht (6) aus offenporigen Gesteinen mit organischen Trägermaterialien als Filterschicht vorgeordnet sind.

3. Anlage nach Anspruch 2, dadurch gekennzeichnet, daß die Grob- (5) bzw. Feinfilterschicht (6) aus körnigem Material, insbesondere Lavagrus, mit einer Korngröße von mehr bzw. weniger als etwa 1,5 mm bestehen.

4. Anlage nach einem der Ansprüche 1 - 3, dadurch gekennzeichnet, daß oberhalb der Filterschicht (5, 6) eine Verteilerschicht (8) aus porösem Material vorgesehen ist.

5. Anlage nach einem der Ansprüche 1 - 4, dadurch gekennzeichnet, daß zumindest zwei jeweils Verteiler-, Filter- und Stauschicht (8; 5, 6; 7) umfassende Tropfkörper (4) in einem Gitterkorb (3) od.dgl. zu einer Tropfkörpereinheit (1) übereinandergeschichtet sind.

6. Anlage nach Anspruch 5, dadurch gekennzeichnet, daß zwei oder mehr übereinandergestapelte Tropfkörpereinheiten (1) einen Tropfkörperturm (11, 12, 13) bilden, dem ein gemeinsamer Abwasserverteiler (14) und eine gemeinsame Auffangwanne (15) zugeordnet sind.

7. Anlage nach Anspruch 5 oder 6, gekennzeichnet durch einen Reinigungskreislauf (9), der von einem Abwassersammelbehälter (10) ausgeht und über wenigstens eine Tropfkörpereinheit oder einen Tropfkörperturm, vorzugsweise über drei hintereinandergeschaltete Trofkörpertürme (11, 12, 13) führt.

8. Anlage nach Anspruch 7, dadurch gekennzeichnet, daß der Abwassersammelbehälter (10) mit einer Schneidepumpe (16) ausgestattet ist.

9. Anlage nach Anspruch 7 oder 8, dadurch gekennzeichnet, daß dem ersten Tropfkörperturm (11) eine Schlammabscheideeinrichtung (18) aufgesetzt ist, die vorzugsweise mehrere parallele, in einem Gitterkorb (19) schräg angeordnete Siebeinsätze (20) aufweist.

## Claims

1. A waste-water biological purification plant comprising at least one drip member (4) disposed between an upper waste-water distributor (14) and a lower collecting trough (15) and comprising a water-permeable filter layer (5, 6) holding micro-organisms and a retaining layer (7) disposed behind the filter layer (5, 6) and alternately blocking or releasing the flow of water, characterised in that the retaining layer (7) consists of montmorillonite-containing clay minerals.

2. A plant according to claim 1, characterised in that the retaining layer (7) is preceded by a coarse filter layer (5) and a fine filter layer (6) of open-pore stones with a filter layer in the form of organic carrier materials.

3. A plant according to claim 2, characterised in that the coarse filter layer (5) and the fine filter layer (6) are of granular material, more particularly scorified lava, with a particle size of more than and less than about 1.5 mm respectively.

4. A plant according to any of claims 1 to 3, characterised in that a distributing layer (8) of porous material is disposed above the filter layer (5, 6).

5. A plant according to any of claims 1 to 4, characterised in that at least two drip members (4) each comprising a distributing layer (8), a filter layer (5, 6) and a retaining layer (7), are disposed one above the other in a cage (3) or the like to form a drip member unit (1).

6. A plant according to claim 5, characterised in that two or more superposed drip member units (1) form a drip-member tower (11, 12, 13) associated with a common waste-water distributor (14) and a common collecting trough (15).

7. A plant according to claim 5 or 6, characterised by a purification circuit (9) which starts from a waste-water reservoir (10) and extends over at least one drip-member unit or drip-member tower, preferably over three drip-member towers (11, 12, 13) in series.

8. A plant according to claim 7, characterised in that the waste-water reservoir (10) is equipped with a cutting pump (16).

9. A plant according to claim 7 or 8, characterised in that a sludge separator (18) is mounted on the first drip-member tower (11) and preferably comprises a number of parallel screen inserts (20) disposed at an angle in a cage (19).

## Revendications

1. Installation d'épuration biologique des eaux usées, comportant au moins un lit bactérien (4), prévu entre un répartiteur supérieur d'eaux usées (14) et un bac d'interception inférieur (15), lit qui comporte une couche filtrante (5, 6), perméable à l'eau, qui capte les microorganismes, et une couche de retenue (7), disposée en aval de la couche filtrante (5, 6), et qui alternativement arrête ou libère l'écoulement de l'eau, caractérisée en ce que la couche de retenue (7) est constituée de produits minéraux de type argile contenant de la montmorillonite.

2. Installation selon la revendication 1, caractérisée en ce qu'en amont de la couche de retenue (7) sont disposées une couche filtrante grossière (5) et une couche filtrante fine (6), en roches à pores ouverts, avec comme couche filtrante des matériaux supports organiques.

3. Installation selon la revendication 2, caractérisée en ce que la couche filtrante grossière (5) et la couche filtrante fine (6) sont constituées d'un matériau granulaire, en particulier des fines de lave, ayant une granulométrie respectivement supérieure et inférieure à environ 1,5 mm.

4. Installation selon l'une des revendications 1 à 3, caractérisée en ce qu'on prévoit, au-dessus de la couche filtrante (5, 6), une couche de répartition (8) en un matériau poreux.

5. Installation selon l'une des revendications 1 à 4, caractérisée en ce qu'au moins deux lits bactériens (4), comportant chacun une couche de répartition, des couches filtrantes et une couche de retenue (8 ; 5, 6 ; 7) sont superposées dans un panier en treillis (3) ou analogues, pour former une unité de lits bactériens (1).

6. Installation selon la revendication 5, caractérisée en ce qu'au moins deux unités de lits bactériens (1), disposées les unes sur les autres, forment une tour de lits bactériens (11, 12, 13), tour à laquelle sont affectés un répartiteur commun d'eaux usées (14) et un bac d'interception commun (15).

7. Installation selon la revendication 5 ou 6, caractérisé par un circuit d'épuration (9), qui part d'un réservoir collecteur d'eaux usées (10) et, par au moins une unité de lits bactériens ou une tour de lits bactériens, passe de préférence au-dessus de trois tours de lits bactériens (11, 12, 13) disposées en aval les unes des autres.

8. Installation selon la revendication 7, caractérisée en ce que le réservoir collecteur d'eaux usées (10) est équipé d'une pompe de coupure (16).

9. Installation selon la revendication 7 ou 8, caractérisée en ce qu'au-dessus de la première tour de lits bactériens (11) est disposé un dispositif séparateur de boues (18), qui présente de préférence plusieurs cartouches filtrantes (20), parallèles, disposées obliquement dans un panier en treillis (19).
